# EUROPÄISCHE PATENTANMELDUNG

(11) **EP 1 705 888 A1**
(43) Veröffentlichungstag der Anmeldung: **27.09.2006**
(21) Anmeldenummer: 05006086.2
(22) Anmeldetag: 20.03.2005
(51) Int. Cl.: H04M 7/00, H04M 3/44

(54) **Vermittlungsplattform für Internettelefonie**

(71) Anmelder: Least Cost Telecom NfG GmbH + Co KG, 6370 Kitzbühel (AT)
(72) Erfinder: Dopf, Walter, Dipl.-Ing., 1020 Wien (AT)
(74) Vertreter: Cremer, Ulrike Theresia

(57) **Zusammenfassung**

Die vorliegende Erfindung betrifft eine Vermittlungsplattform für Internettelefonie (VoIP-PT), die wenigstens einen Proxy (Pr) und Registrar (Rg) zur Verwaltung registrierter Teilnehmer umfasst, die nach dem Session Inition Protocol (SIP) oder einem ihrer Derivate arbeitet, wobei der Registrar (Rg) mindestens einen realm, vorzugsweise mehrere realms verwaltet, und die mit wenigstens einem Internet-Gateway (VoIP-Gateway), insbesondere einem Voice-Switch, als Schnittstelle zu einem öffentlichen Telefonnetz (PSTN) in Verbindung steht, und wobei an das öffentliche Telefonnetz (PSTN) eine Anzahl Telefonanlagen (PBx) angeschlossen sind, die eine beliebige Anzahl über Endgerätenummern (EN1, EN2, EN), bestehend aus Kopfnummern (KN, KN1, KN2) und Durchwahlnummern (DW, DW1, DW2), direkt adressierbare Endgeräte (PC, Tel, PDA) aufweisen. Erfindungsgemäß wird eine aus dem öffentlichen Netz (PSTN) an den Proxy (Pr) gesendete Endgerätenummer (EN, EN1, EN2), insbesondere als called party number bezeichnet, über ein erstes Mapping-Verfahren (Map1) in der Vermittlungsplattform (VoIP-PT) für eine Zuordnung eines im Registrar (Rg) vermerkten realms und für eine Aussonderung einer Durchwahlnummer (DW, DW1, DW2) aufbereitet und es ist eine aus einer Telefonanlage (PBx) an den Proxy (Pr) gesendete Durchwahlnummer (DW, DW1, DW2) nebst zuordenbarem realm über ein zweites Mapping-Verfahren (Map2) in der Vermittlungsplattform (VoIP-PT) zu einer Endgerätenummer (EN, EN1, EN2), insbesondere als calling party number, verbindbar.

## Beschreibung

Die Erfindung betrifft eine Vermittlungsplattform für Internettelefonie, insbesondere eine, die nach einem session inition protocol oder einem entsprechenden Derivat des session inition protocols (sip) eine SIP-Telefonie betreibt.

Die vorliegende Erfindung bezieht sich auf eine Vermittlungsplattform, die gelegentlich in der fachspezifischen Umgangssprache auch nur als Proxy, obwohl dieser nur eine Komponente der Vermittlungsplattform ist, oder als Kommunikationsswitch oder Kommunikationsplattform bezeichnet wird.

Das SIP-Protokoll ist seit 1999 für Internet-Datenaustausch durch so genannte RFCs schrittweise spezifiziert worden. In diesem Zusammenhang sei auf den request for comments (RFC) 3261 bzw. 2543 verwiesen, der als SIP-Grundlagenbeschreibung betrachtet werden kann. Die diversen RFCs, die sich auf das SIP-Protokoll beziehen, behandeln zahlreiche Aspekte der Intemetkommunikation. Besonders aufschlussreich sind die RFCs, die sich auf Internettelefonie (Voice over Internet Protocol; VolP) beziehen.

In der Fachwelt ist umstritten, ob nur der RFC 2543 bzw. 3261 oder auch die späteren RFCs als SIP-Protokoll bezeichnet werden dürfen, oder ob ein SIP-Protokoll, das auch spätere RFCs beachtet, als Derivat des SIP zu bezeichnen ist. Aus den zahlreichen RFCs hat sich aber inzwischen ein universell einsetzbarer, allgemein gültiger Standard herausgebildet. Die vorliegende Erfindung bezieht sich auf diesen in der Fachwelt bekannten Standard. Proprietäre Elemente werden so weit wie möglich unterlassen. Idealerweise sind alle Befehle des Protokolls der vorliegenden Erfindung durch die weithin akzeptierten RFCs spezifiziert, ohne einen Sonderweg einzuschlagen.

In dem Bestreben, die Internettelefonie mit dem klassischen öffentlichen Telefonnetz zu verheiraten, das insbesondere bei dem digitalen ISDN-Standard, z. B. im deutschsprachigen Raum nach dem SS7-Protokoll, arbeitet, und in dem Bestreben, die Protokolle soweit zu vereinheitlichen, dass über einen Gateway der telefonmäßige Austausch zwischen den Netzen grundsätzlich möglich ist, gibt es zahlreiche Literaturstellen zur Diskussion für Einzelverbindungs- und Einzelteilnehmeraufbauten.

Der Einzelteilnehmer erhält einen realm, der in Anlehnung an das http-Protokoll und seinen Sprachgebrauch auch gelegentlich als domain bezeichnet wird. Beide Begriffe werden im Folgenden generell synonym verstanden. Bei einzelnen Erfindungsausgestaltungen kann der jeweilige Begriff Ausgestaltungsspielraum bieten.

An zahlreichen Stellen des öffentlichen Telefonnetzes, deren Teilnehmer über Kopfnummern (KN) adressierbar sind, sind zahlreiche private Telefonnetze und Telefonanlagen (PBx) angeschlossen. Die privaten Telefonanlagen und Telefonnetze umfassen dabei viele Endgeräte, die untereinander typgleich aber auch typunterschiedlich sein können. So können in einem privaten Telefonnetz so unterschiedliche Geräte wie Telefone (Tel), Homecomputer oder Personal Computer (PC) oder auch Mobiltelefone und Handhelds (PDA) vorhanden sein.

In der US 2003/00048892 A1 wird eine private Internettelefonieanlage beschrieben, zu der pro Nummerngruppe eine zugeordnete Person verwaltet wird. Die vorgestellte Lösung bezieht sich daher auf ein reines Internettelefoniesystem, das von einem öffentlichen Netz erreichbar ist. Um die Zahl der Internettelefonieanschlüsse für die Verwaltung zu reduzieren, werden die Nummern von ganzen Gruppen hinter einer zugeordneten Person versteckt. Die Patentanmeldung US 2003/00048892 A1 geht daher in die Richtung, eine Nummernreduktion statt einer Erreichbarkeit aller vorhandenen Nummern in der Internettelefonieanlage zu bieten.

Weitere Grundlagen, die sich auf Internettelefonie (VoIP) beziehen und insbesondere einen Aspekt des SIP-Protokolls näher beleuchten, sind in den Druckschriften WO 03/019919, US 2004/0202302 A1 zu finden. Alle Druckschriften beziehen sich auf ein öffentliches Netz, das mit gleich langen Kopfnummern (KN) arbeitet.

In der US 2003/0118002 A1 wird ein System einer reinen Internettelefonie ohne Anbindung an das öffentliche Netz beschrieben.

In der US 2004/0202302 A1 wird der Nachteil des festen Telefonnumernsystems bei kostenlosen Nummern auf Grund ihrer Endlichkeit in ihren Variationen angesprochen. Die Lösung soll ein festes Aufteilen mehrfach belegter Nummern auf verschiedene Durchwahlnummern sein.

Solche öffentlichen Netze sind insbesondere aus den USA bekannt, woher auch viele Literaturstellen zum SIP-Protokoll stammen. Das nordamerikanische Telefonnetz zeichnet sich dadurch aus, dass es mit festen Kopfnummern arbeitet. Die Kopfnummern werden standardmäßig, sogar immer gleich geblockt, in Zifferngruppen dargestellt. Private Netze (PBx) werden dort so eingebunden, dass einer gesamten Gruppe von aufeinander folgenden Kopfnummern einzelne Teilnehmer als Durchwahlteilnehmer zugeordnet werden. Die privaten Netze sind somit auf eine reine Endgerätestruktur reduziert.

Demgegenüber existiert in vielen Ländern Europas das Problem des generisch gewachsenen öffentlichen Telefonnetzes mit verschiedenen Kopfnummernlängen. Hinter einzelnen Nummern verstecken sich eigenständige private Netze (PBx), deren Durchwahlnummern (DW, DW1, DW2) unmittelbar von jedem Teilnehmer erreichbar sein sollen. In manchen Ländern werden die Durchwahlnummern auch als Nebenstellennummern bezeichnet, sie haben aber sinngemäß eine ähnliche Bedeutung, nämlich die nummernmäßige Erreichbarkeit eines Endgerätes in dem privaten Netz (PBx). In diesem Zusammenhang wird darauf verwiesen, dass mit dem Begriff private Netze (PBx) nicht auf die Trägerschaft des Netzes, z. B. Behörde, Schule oder Unternehmen, abgestellt wird, sondern der Begriff als Differenzierung zum öffentlichen Netz dient.

Die Investitionen in die privaten Netze (PBx) sind je nach den wirtschaftlichen Fähigkeiten des Netzbetreibers, z. B. Industriebetriebe, Behörden oder Privathaushalten, für diesen so beachtlich, dass trotz Überalterung des Netzes und auch seiner Endgeräte an der Struktur, der Infrastruktur, den Geräten und dem gesamten Arrangement mit Telefonanlagen festgehalten wird. Der Netzbetreiber möchte mit seinem Netz an der Internettelefonie (VoIP) teilnehmen können. Dabei möchte er für andere VolP-Teilnehmer an allen Endgeräten erreichbar sein.

Auf der Internet-Seite http://enum.nic.at/documents/AETP/Presentations/Austria/0017-2003-07-IETF57-ENUM-Demo/2003-07-ENUM-Demo_ietf57.ppt wird ein ENum-Verfahren über einen DNS vorgestellt. Ein DNS-Verfahren basiert auf einer externen Abfrage, die über eine IP-Verbindung durchzuführen ist. Das Verfahren läuft nur sicher, wenn die IP-Verbindung sicher steht. Sie benötigt Zeit, um den Austausch zur Abfrage zu bewerkstelligen. Die ermittelte Antwort wird an einen IP-Server geschickt, dem alle Durchwahlnummern bekannt sein müssen. Obwohl die oben bezeichnete Internet-Seite seit 2003 bekannt ist, befindet sich das Verfahren auf ENum-Basis immer noch im Versuchsstatus. Der Prozess der allgemeinen Akzeptanz des auf der Internet-Seite vorgeschlagenen Lösungswegs für Kommunikationsaufbauten wirft auch schon ein Licht auf einen wesentlichen Nachteil des ENum-Verfahrens. Durch die zentrale DNS-Verwaltung verbleibt die Verwaltung an einer Stelle, der Plattform-Betrieber hat mit seinem Proxy nicht die Möglichkeit, die gesamte Verwaltung in Eigenverantwortung durchzuführen. Solche Abstimmungsprozesse sind aufwendig.

Der Internettelefonieanbieter hat häufig keine vollständige Kenntnis des privaten Netzes. Er muss aber dem Netzbetreiber des privaten Netzes zusagen können, dass das momentane private Netz vollständig einbindbar ist. Weiterhin wird häufig die Forderung aufgestellt, auch zukünftige, noch nicht bekannte Netzgestaltungen abzufangen.

Diese sich, vor allem in vielen europäischen Ländern durch das variable Kopfnummernsystem (KN) noch erschwerend, darstellende Situation muss durch ein Protokoll gelöst werden, das stark durch das nordamerikanische Telefonnetz beeinflusst, so nicht anwendbar ist. Gleichzeitig soll das sich zum faktischen Standard mausernde Protokoll aber weiter verwendbar sein. Es soll kein vollständig eigenständiges Protokoll geschaffen werden. Es wird auf das SIP-Protokoll in der einen oder anderen Ausgestaltungsform zurückgegriffen.

Die erfindungsgemäße Aufgabe wird durch den kennzeichnenden Teil des Hauptanspruchs gelöst, vorteilhafte Ausgestaltungen sind den abhängigen Ansprüchen, der Beschreibung und den Beispielen zu entnehmen.

In den folgenden Ausführungen wird auf das Mapping-Verfahren bei dem Vorhandensein vieler Durchwahlnummern ein Schwerpunkt gelegt. Es ist selbstverständlich, dass auch solche Vermittlungsplattformen unter die Erfindung fallen, die eine Kombination aus den klassischen, bisher bekannten, Vermittlungsformen mit einzelnen realms für jeden Benutzer als auch eine erfindungsgemäße Bearbeitung von vielen Durchwahlnummern zur Verfügung stellen.

Im Folgenden bedeutet KN, KN1, KN2 das Vorhandensein von verschiedenen Kopfnummern. DW, DW1, DW2 bedeuten unterschiedliche Durchwahlnummern. EN1, EN2 und EN sind beliebige, unterschiedliche oder gleiche Endgerätenummern.

Die Vermittlungsplattform (PT), die zum Aufbau von Telefongesprächen bei Internettelefonie genutzt werden kann (VoIP-PT), umfasst wenigstens einen Proxy (Pr) und Registrar (Rg) zur Verwaltung registrierter Teilnehmer. Daneben kann die Plattform auch andere Komponenten umfassen, wie zum Beispiel einen Redirect (Re). Die Vermittlungsplattform arbeitet nach dem Session Inition Protocol (SIP) oder einem ihrer Derivate. Über den Registrar (Rg) kann mindestens ein realm, idealerweise mehrere realms, also eine sehr große Anzahl an realms, verwaltet werden. Die Vermittlungsplattform steht mit wenigstens einem Gateway (VoIP-Gateway) (Voice-Gateway), insbesondere einem Voice-Switch, als Schnittstelle zu einem öffentlichen Telefonnetz (PSTN) in Verbindung. In Verbindung stehen bedeutet, dass entweder direkt oder indirekt über weitere Knotenrechner und Verbindungsswitches oder Verbindungshubs die Verbindung zu dem öffentlichen Telefonnetz gegeben ist. An das öffentliche Telefonnetz ist eine Anzahl Telefonanlagen (PBx) angeschlossen. Die Betreiber einer Telefonanlage wollen den Nutzern der Telefonanlage die Möglichkeit einräumen, die Vermittlungsplattform im Rahmen von Internettelefonie benutzen zu können. Die Telefonanlagen bieten eine beliebige Anzahl von Endgeräten, die über Endgerätenummern (EN1, EN2, EN), bestehend aus Kopfnummern (KN, KN1, KN2) und Durchwahlnummern (DW, DW1, DW2), direkt adressierbar sind. In der Vermittlungsplattform werden wenigstens zwei mapping-Verfahren angeboten und angewendet. Eine aus dem öffentlichen Netz (PSTN) an den Proxy (Pr) gesendete Endgerätenummer (EN, EN1, EN2), insbesondere als called party number bezeichnet, wird über ein erstes Mapping-Verfahren (Map1) in der Vermittlungsplattform (VolP-PT) bearbeitet. Durch die Bearbeitung wird eine Zuordnung eines im Registrar (Rg) vermerkten realms und eine Aussonderung einer Durchwahlnummer (DW, DW1, DW2) aufbereitet. Das zweite Mapping-Verfahren kümmert sich um die Kommunikation in die zum ersten Mapping-Verfahren entgegengesetzte Kommunikationsrichtung. Eine aus einer Telefonanlage (PBx) an den Proxy (Pr) gesendete Durchwahlnummer (DW, DW1, DW2) nebst zuordenbarem realm wird über das zweite Mapping-Verfahren (Map2) in der Vermittlungsplattform (VoIP-PT) in eine Endgerätenummer (EN, EN1, EN2), insbesondere als calling party number bezeichnet, durch Verbindung der Nummern geformt. Durch die Schaffung zweier Mapping-Verfahren benötigt der Betreiber einer Telefonanlage nur einen realm. Der realm steht ersatzweise für die Kopfnummer der Telefonanlage, über die die Telefonanlage erreichbar ist. Die Endgeräte werden durch die Durchwahlnummern auf den realm angebunden.

Nach einem weitem Aspekt kann das erste Mapping-Verfahren näher dargelegt werden. Die Zuordnung des ersten Mapping-Verfahrens (Map1) erfolgt nach einem Reduktionsverfahren mit einer Kopfnummernidentifizierung zu einem korrespondierenden realm. Insbesondere wird mit einem portfreien und gatewayfreien iterativen, an einem Ende der Endgerätenummer (EN, EN1, EN2) startenden, vorzugsweise dem Durchwahlnummernende der Endgerätenummern, vorzugsweise sukzessiven, Reduktionsverfahren gearbeitet, das eine schrittweise Verkürzung der Endgerätenummer (EN, EN1, EN2) durchführt. Das Verfahren erlaubt, flexibel mit beliebigen Nummernlängen umgehen zu können. Es können auch öffentliche Telefonnetze bedient werden, die mit sehr unterschiedlich langen Endgerätenummern arbeitet, egal ob durch die Kopfnummer (KN, KN1, KN2) oder durch die Durchwahlnummer (DW, DW1, DW2) bedingt.

Die Vermittlungsplattform ist in der Lage, das öffentliche Telefonnetz nach einem digitalen Standard, wie dem ISDN-Standard nach zum Beispiel SS7 (Deutschland) und seinen jeweiligen örtlichen Abwandlungen oder C7 (USA) und seinen jeweiligen örtlichen Abwandlungen, zu bedienen. Insbesondere nach dem SS7-Standard werden Kopfnummernlängen der Kopfnummern (KN, KN1, KN2) zugelassen, die für die eindeutige Bestimmung einer Teilnehmergruppe im öffentlichen Telefonnetz variabel ist. Der bisher definierte SIP-Standard über diverse RFCs geht expressis verbis bzw. teilweise nicht ausgesprochen von einer geblockten, gleichlangen Kopfnummer aus. Zur Zuordnung und Durchführung der Kommunikation in die entgegen gesetzte Richtung geht das zweite Mapping-Verfahren (Map2) so vor, das mittels Tabellenwerk (TW) aus dem realm in einem Zwischenschritt die Kopfnummer (KN, KN1, KN2) gebildet wird, die an die die gesendete Durchwahlnummer (DW, DW1, DW2) angebunden wird. Durch den Zwischenschritt geht die Kopfnummer nicht verloren. Es sind auch Plausibilitätsüberprüfungen möglich. Somit wird es unterbunden, fehlerhafte Endgerätenummern zu versenden. Es trägt zur Zuverlässigkeit der Vermittlungsplattform und hinlänglichen Akzeptanz bei.

Der Redirect (Re) der Vermittlungsplattform arbeitet bei der Verwaltung der realms mit dem Registrar (Rg) zusammen. Bei der Unzuständigkeit der Vermittlungsplattform erkennt so der Redirect die fehlerhafte Anwahl und signalisiert das. Vorzugsweise leitet er an die zuständige Vermittlungsplattform die Anrufaufbauanforderung weiter. Der Redirect (Re) vervollständigt das erfinderische Verfahren des sicheren Verwaltens von registrierten Nutzern, ihrer Telefonanlagen und sämtlicher Durchwahlnummern (DW, DW1, DW2).

Das Mapping nach dem zweiten Verfahren kann nach einem vorteilhaften Aspekt mit einem Tabellenwerk arbeiten. Das Tabellenwerk (TW) umfasst eine Liste, wie eine Durchwahlnumrnemliste (DW-Liste), insbesondere in Form einer weiteren Dimension des Tabellenwerks (TW), die die Durchwahlnummern (DW, DW1, DW2) verwaltet. Die in der weiteren Dimension verwalteten Durchwahlnummern können aktualisiert werden. Hierzu wird die Durchwahlnummernliste (DW-Liste) im Proxy aus SIP-Protokollen, einfügbaren Updates oder Telefonieteilnehmeridentifikationen ergänzt. Durch ein solches Verfahren kann der Proxy umfangreichere Datenbestände erhalten. Im Laufe der Zeit können so auch alle Durchwahlnummern einer zunächst unbekannten Telefonanlage (PBx) aufgebaut werden.

Das SIP-Derivat umfasst einen Befehl, der die Durchwahlnummer (DW, DW1, DW2) an die mittels Kopfnummer (KN, KN1, KN2) identifizierte Telefonanlage (PBx) überträgt, beispielhaft einen rufaufbauenden Befehl wie ein Invite, Refer oder Reinvite. Somit wird direkt an den Anfang des Kommunikationsaufbaus durch die Vermittlungsplattform (VoID-PT) die Übertragung der Durchwahlnummer und die Bestimmung des realm gestellt.

Nach einem vorteilhaften Aspekt der Erfindung bleibt die Infrastruktur des Telefonanlagenbetreibers unangetastet. Der Telefonanlagenbetreiber hat die Möglichkeit, neben dem öffentlichen Netz für seine Telefongespräche auch das Internet zu nutzen. Die Vermittlungsplattform kann jedes Endgerät über den realm direkt adressieren.

Im Folgenden wird die Erfindung anhand von Beispielen beschrieben. Die Beschreibungen sind lediglich beispielhaft und schränken den allgemeinen Erfindungsgedanken nicht ein.

### Beispiel 1

In dem folgenden Beispiel wird der Kommunikationsaufbau über das SIP-Protokoll nach einem Aspekt der Erfindung zwischen öffentlichen Telefonnetz und Telefonanlage wiedergegeben. Es sind im österreichischen Wien beheimatete Nummern gewählt worden, die ein dreistelliges Durchwahlnummemnetz als Telefonanlagennetz im Beispiel abdecken können. Das Beispiel bricht nach einem erfolgreichen Verbindungsaufbau einer erfindungsgemäßen Vermittlungsplattform in seiner Darstellung ab. Natürlich ist auch die Beendigung des Gesprächs wesentlich. Zur Beendigung gibt es laut RFC zwei unterschiedliche Verfahren, die hier nicht näher dargelegt werden müssen.

Ein wesentlicher Aspekt der Erfindung ist der erfolgreiche Verbindungsaufbau am Anfang des Gesprächs.

Das Beispiel stellt das mapping (MAP1), siehe die rechte Spalte, dar. Ein Invite baut mit der Kopfnummer (KN) 0043112345 eine Vermittlung zu der Durchwahlnummer (DW) 111 auf. Der CPE-Gateway ist der Gateway, der in der Obliegenheit des Telefonanlagenbetreibers existiert.

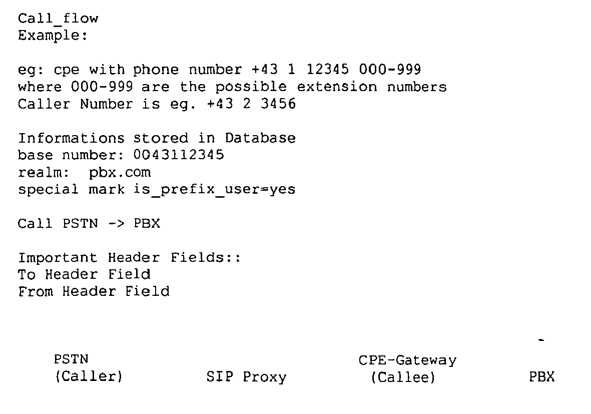

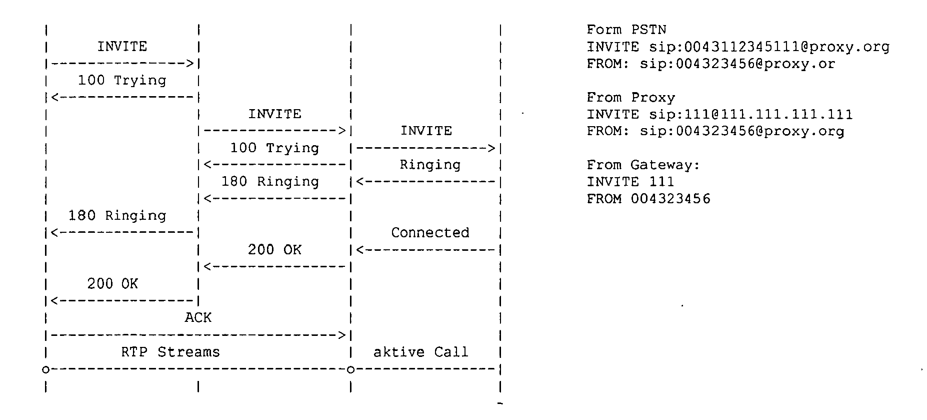

### Beispiel 2

In dem folgenden Beispiel wird ein Kommunikationsprotokoll dargestellt, das einen Verbindungsaufbau zwischen einer privaten Telefonanlage und dem öffentlichen Telefonnetz mittels erfindungsgemäßer Vermittlungsplattform darstellt. Hier wird der Schritt des umgekehrt mappings (Map2) näher verdeutlicht (siehe ebenfalls die rechte Spalte).

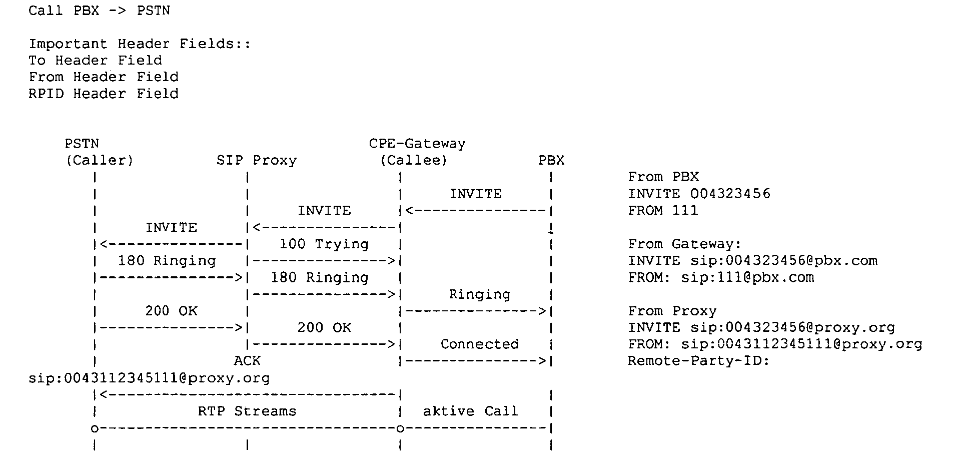

### Beispiel 3

Die Erfindung kann nicht nur dazu dienen, eine Vermittlung zwischen öffentlichem Telefonnetz und privaten Telefonanlagen herzustellen, sondern die Vermittlungsplattform kann auch dazu dienen, zwischen zwei privaten Telefonanlagen mittels Internettelefonie eine Verbindung herzustellen. In dem folgenden Beispiel ist dieser mapping-Prozess dargestellt. Der Caller ist der Anrufende, der Callee ist der angerufene.

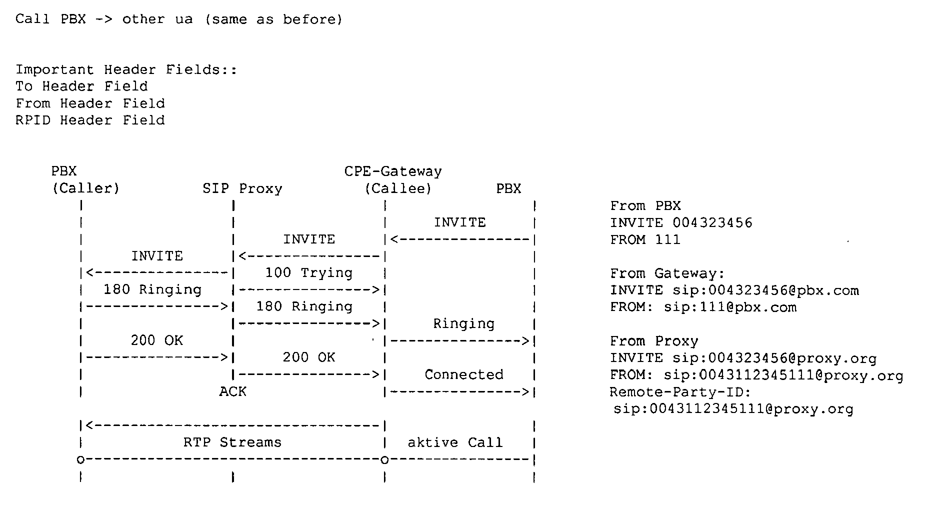

### Beispiel 4

In dem folgenden Beispiel wird, nicht wie zuvor graphisch sondern als Trace, ein Anruf einer erfindungsgemäßen Vermittlungsplattform von einem privaten Telefonnetz in das öffentliche Netz dargestellt. Hier wird eine Kommunikation mit zahlreichen Durchwahlnummern dargestellt. Die Verbindung zwischen privater Telefonanlage und öffentlichem Telefonnetz wird näher dargestellt. Beispielhaft ist die Durchwahl (DW) 111 gewählt. Die Kopfnummer in dem Beispiel ist als 0043112345 (KN) angegeben.

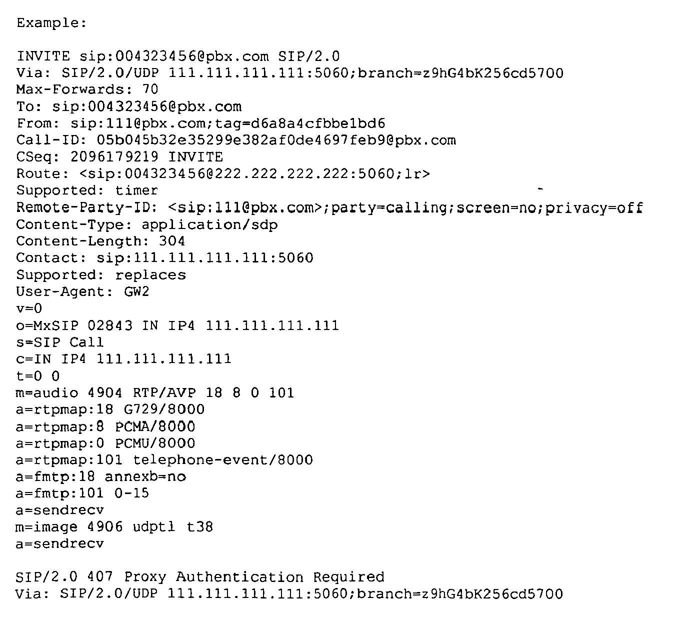

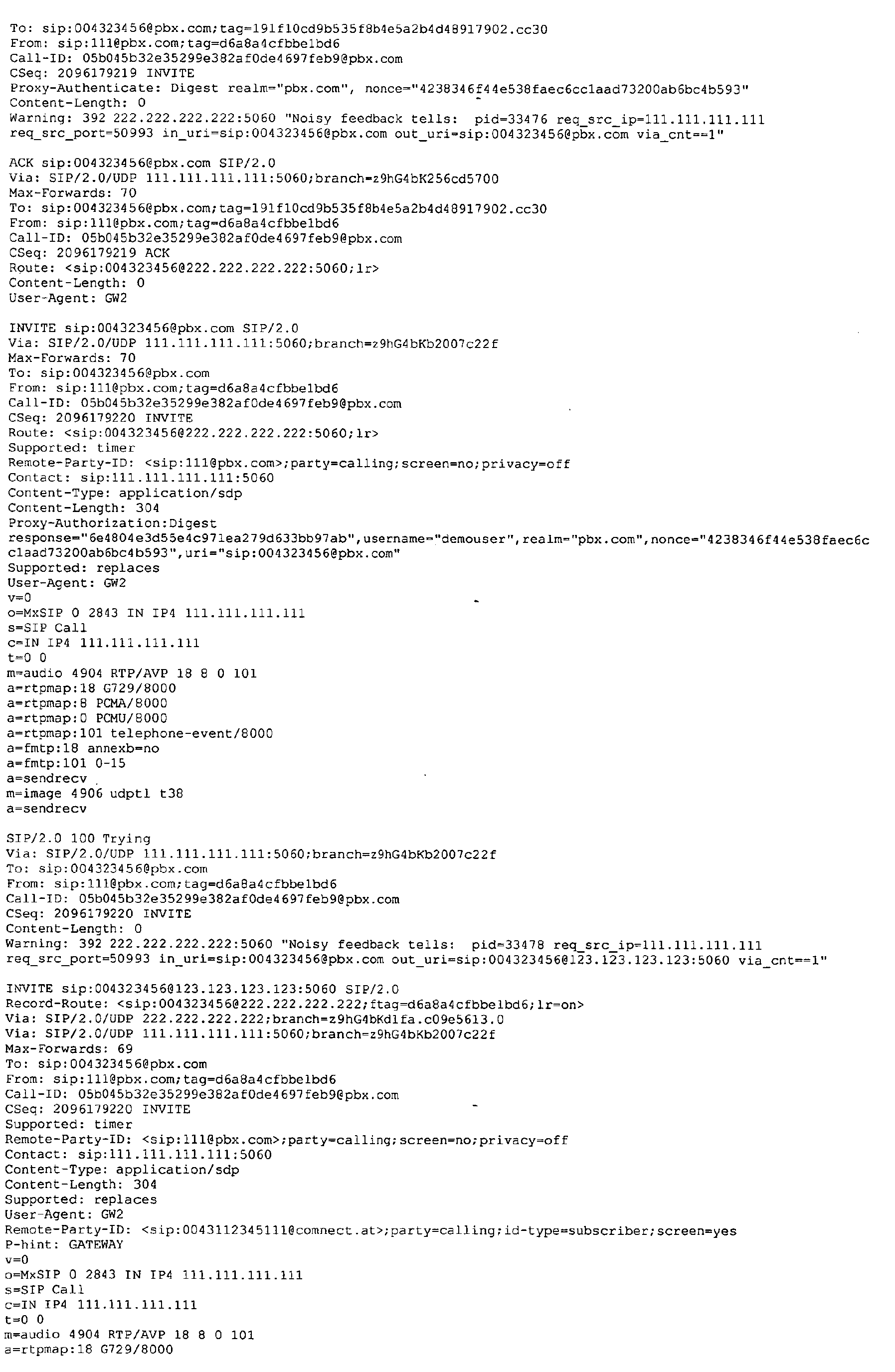

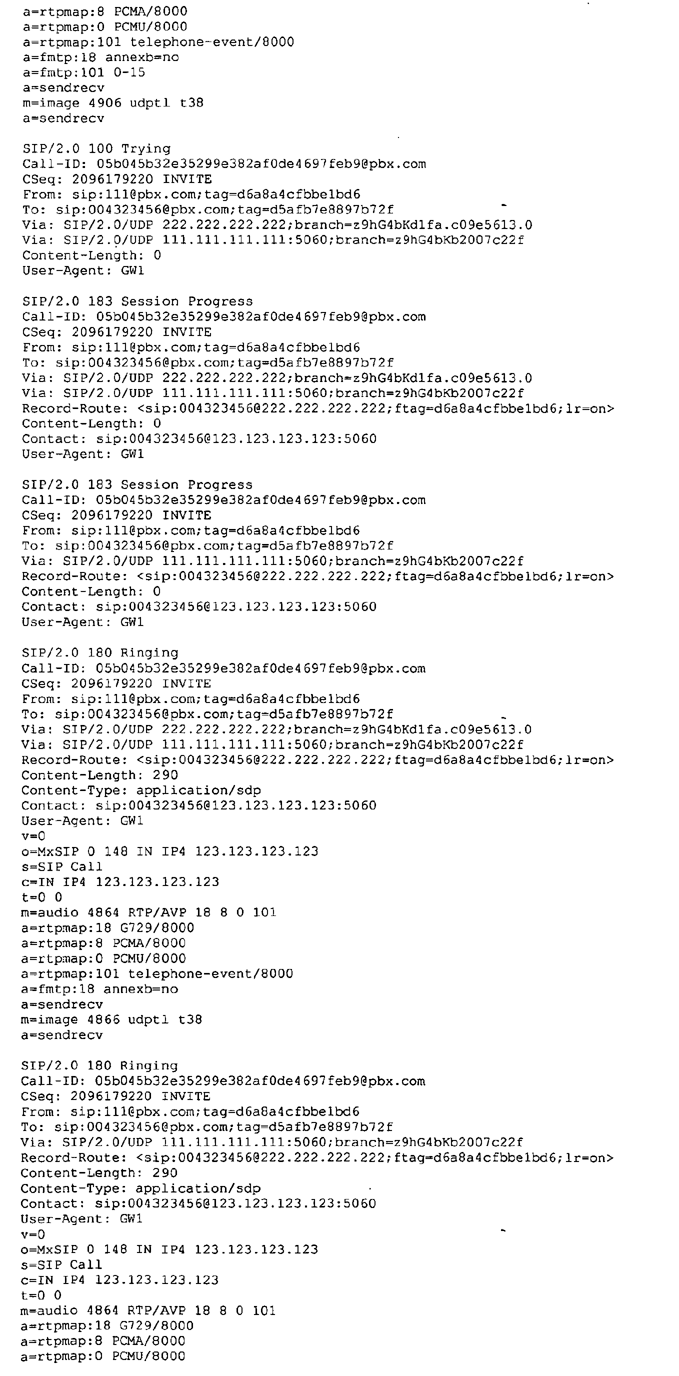

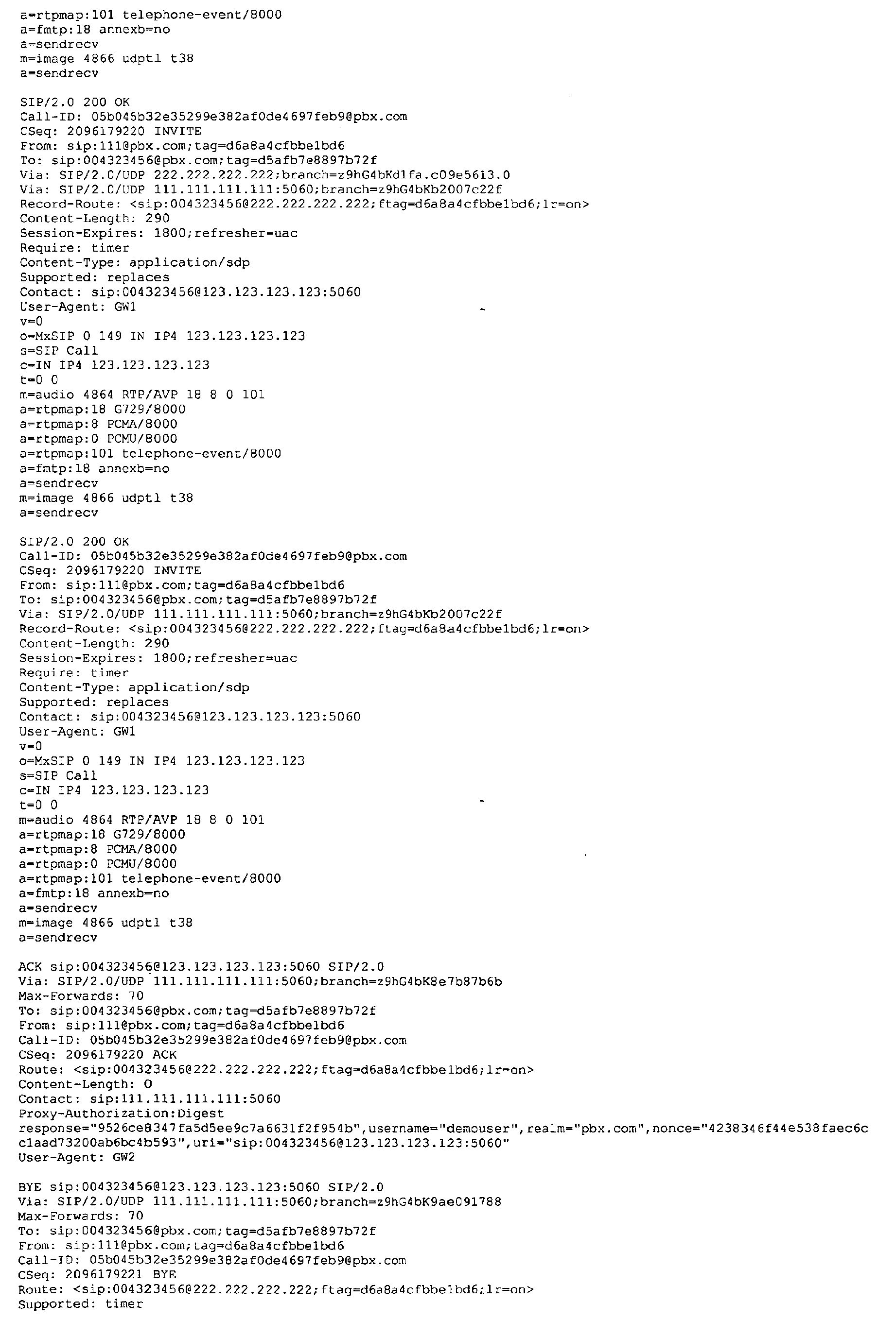

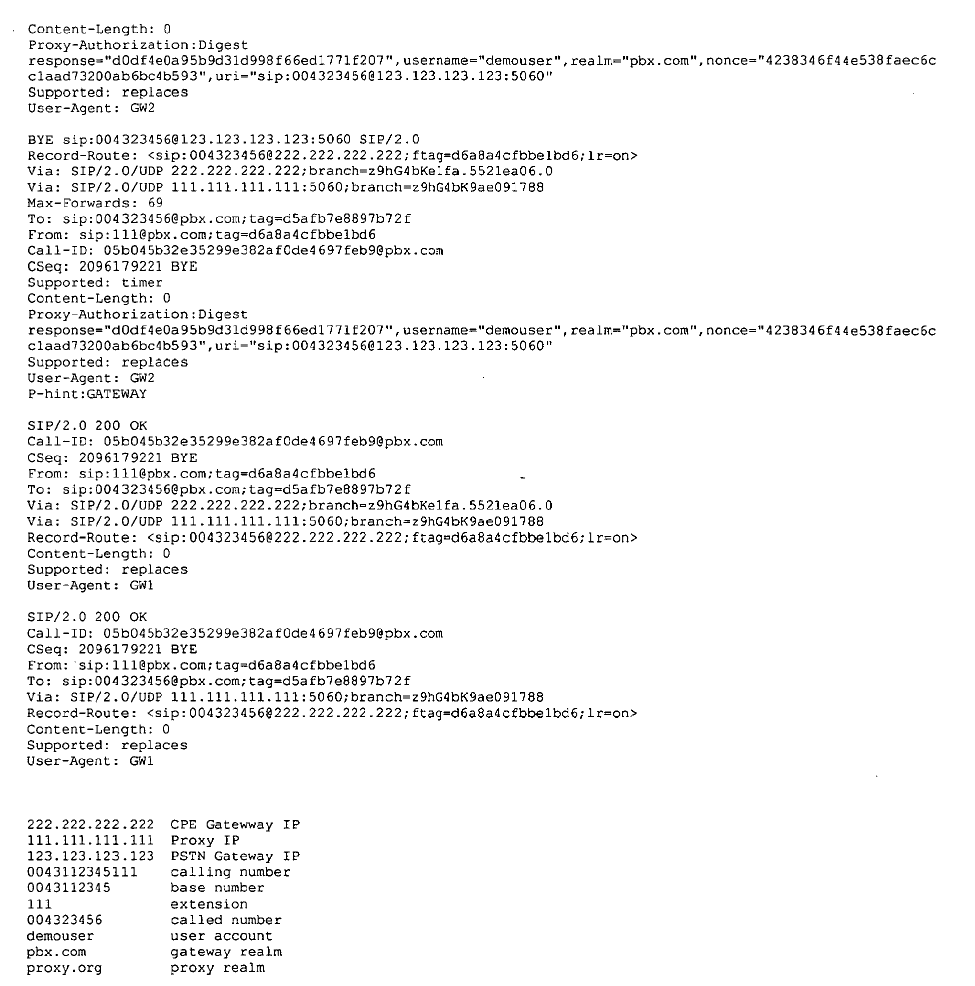

### Beispiel 5

In dem folgenden Beispiel wird ebenfalls als Trace ein Anruf auf einer erfindungsgemäßen Vermittlungsplattform von einem öffentlichen Telefonnetz in das private Telefonnetz mit zahlreichen Durchwahlnummern dargestellt. Beispielhaft ist die Durchwahl (DW) 111 gewählt. Die Kopfnummer in dem Beispiel ist als 0043112345 (KN) angegeben.

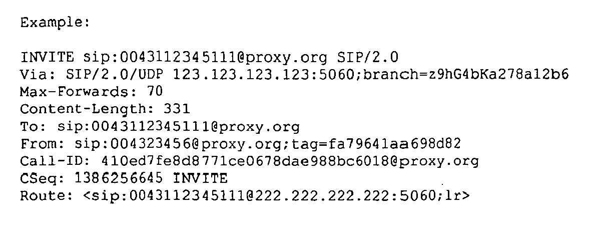

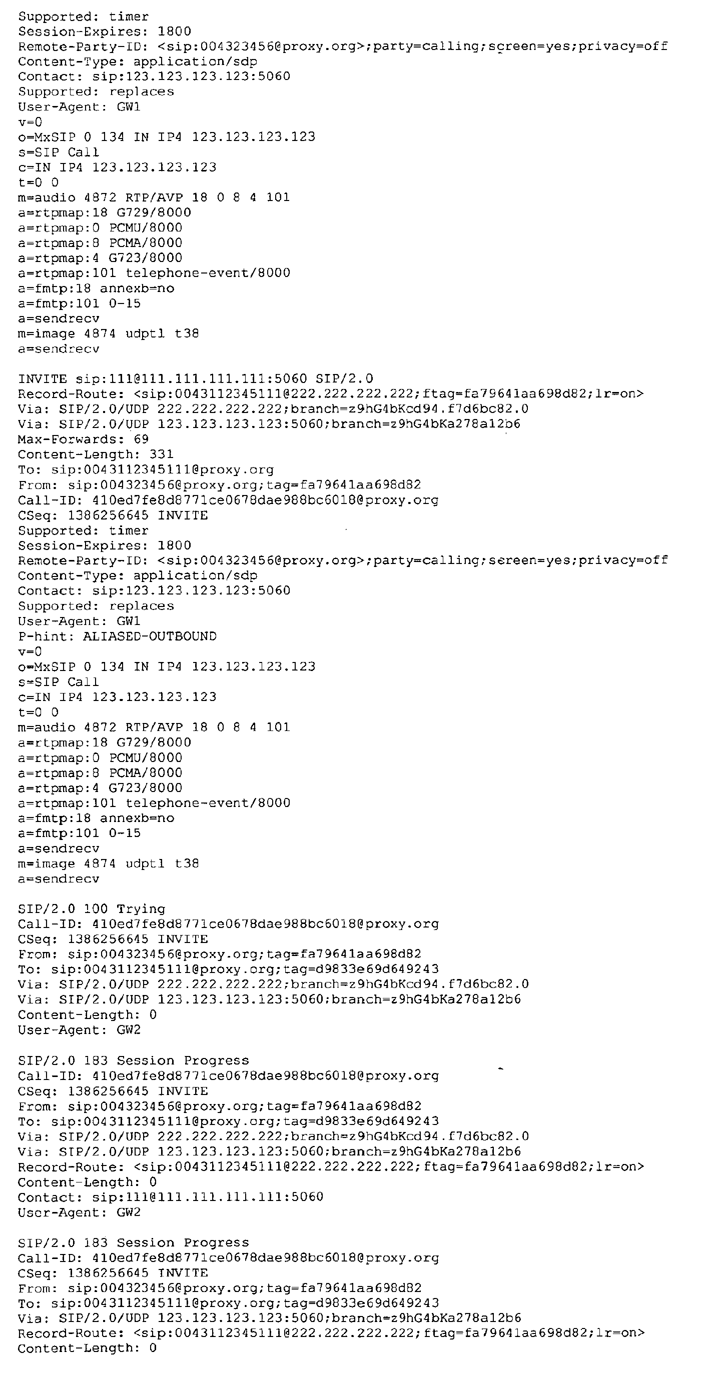

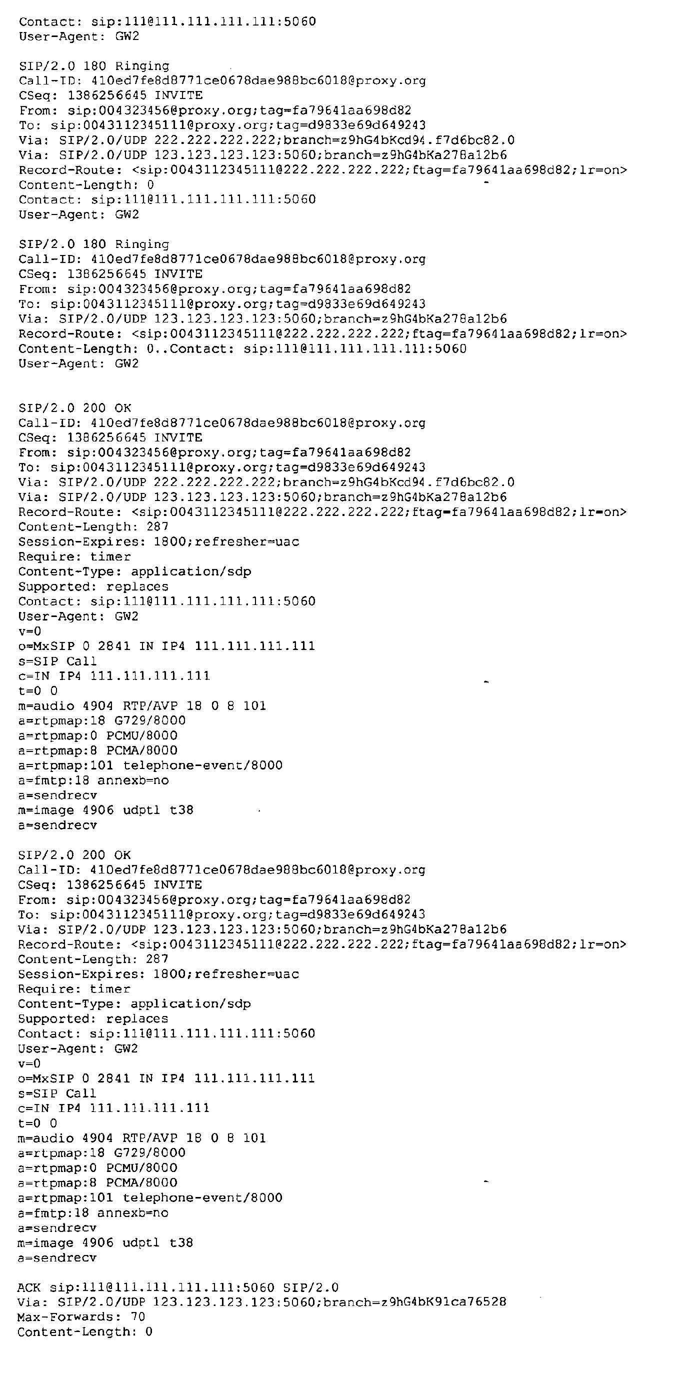

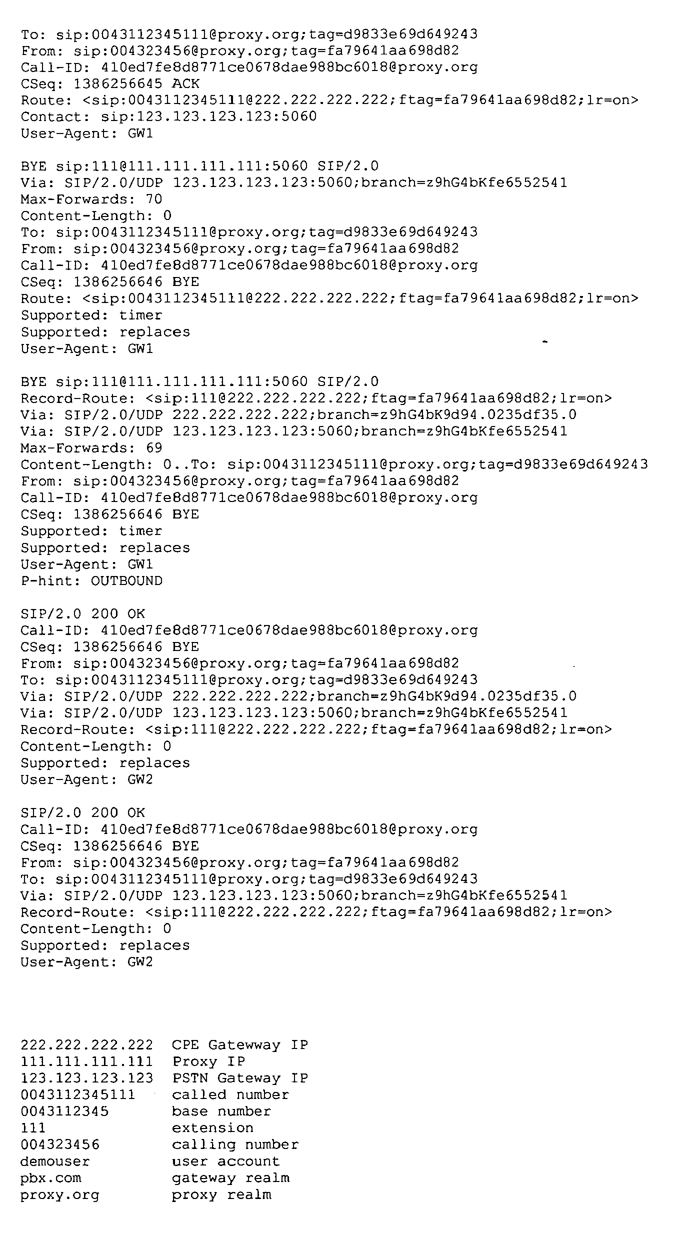

### Beispiel 6

In dem folgenden Beispiel wird dargestellt, wie sich der Gateway der privaten Telefönanlage am Registrar (Rg) der Vermittlungsplattform anmeldet. Der Registrar (Rg) sieht die Telefonanlage als einen Anschluss an. Durch das Mapping wird dann die Aufschlüsselung zu den Durchwahlnummern durchgeführt. In dem Beispiel ist der pbx.com der realm der Telefonanlage, zu der die Kopfnummer (KN) gemappt wird.

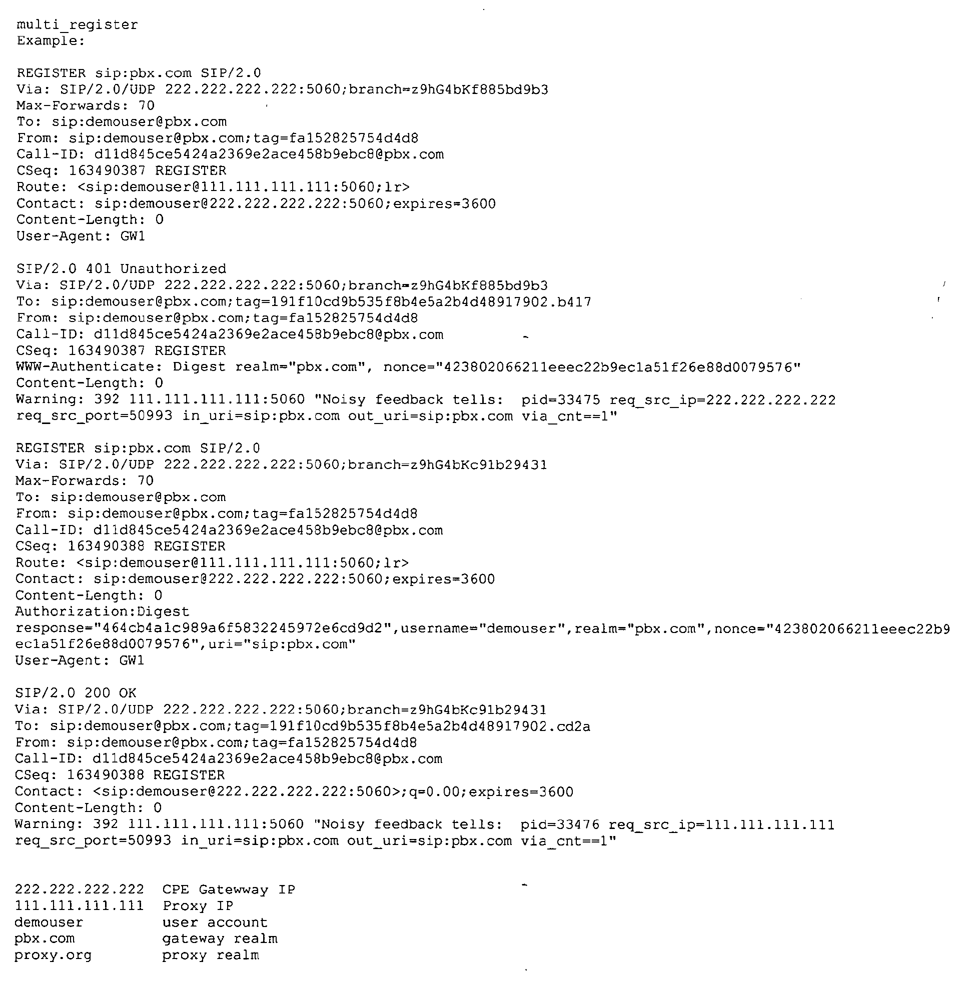

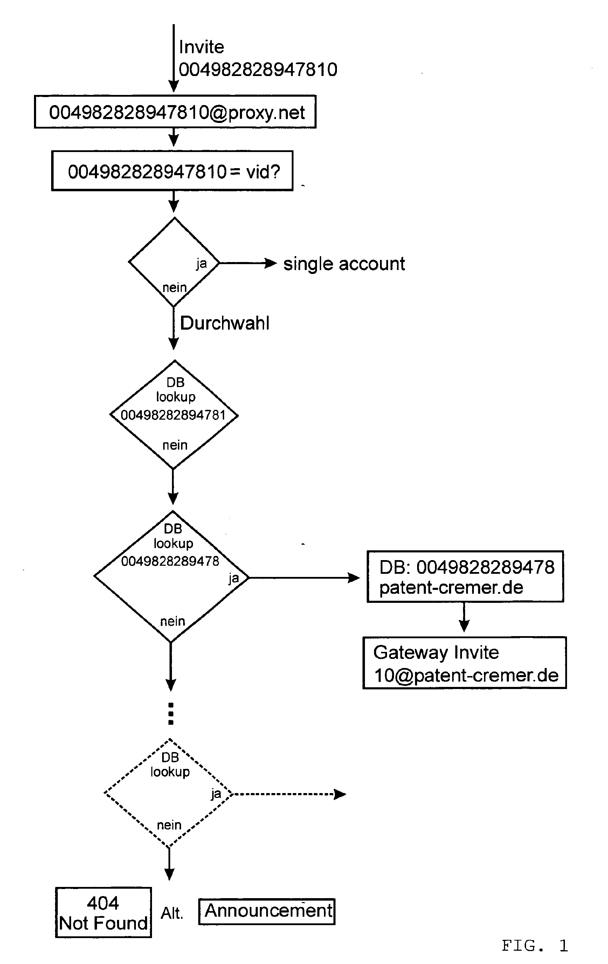

In der einzigen Figur (Fig. 1) wird dargestellt, wie das sukzessive Reduktionsverfahren unter Anwendung des Mapl-Verfahrens funktionieren kann. Es wird eine aus dem öffentlichen Netz an den Proxy gesendete Endgerätenummer über ein erstes Mapping-Verfahren (Map1) in der Vermittlungsplattform für eine Zuordnung eines im Registrar vermerkten realms und für eine Aussonderung einer Durchwahlnummer aufbereitet. Jeder Fachmann, der Ablaufdiagramme lesen kann, sieht die Funktionsweise des Reduktionsverfahrens, das beispielhaft an der deutschen Telefonnummer 08282-89478-10 als Endgerätenummer mit 08282-89478 als Kopfnummer und 10 als Durchwahlnummer dargestellt ist. Im vorliegenden Fall ist es bei dem kleinen Netz der Telefonanlagen und den wenigen Durchwahlnummern vorteilhaft, an der Durchwahlnummernseite der Endgerätenummer mit der Aufbereitung der Zahl für das Mappingverfahren zu starten (Map1). Die Telefonanlage wird durch 08282-89478-0 adressiert. Die Iterationsschritte zur Verkürzung der Endgerätenummer geschehen im Entscheidungsschritt des Datenbank-(DB)-Nachschlagens (DB lookup). Über den Invite-Befehl wird die komplette Endgerätenummer, in dem vorliegenden Beispiel 08282-89478-10, gesendet. Die Nummer wird dem Proxy zugeordnet, der in die Überprüfung eintritt, ob die Nummer bei ihm registriert ist. Findet er die vollständige Nummer augenblicklich, im ersten Schritt, so bricht die Bearbeitung ab ohne dass eine Telefonanlage identifiziert wird, denn die Vermittlungsplattform erkennt die Nummer als einem Einzelendgerät (single account) zugehörig, das an dem Proxy verwaltet wird. Wenn die Überprüfung dazu führt, dass die Nummer generell vom Proxy verwaltbar ist, dann wird durch iterative Verkürzung der Endgerätenummer (EN) immer wieder erneut überprüft, ob ein realm auf dem Proxy zuordenbar ist. Die gesamten Abläufe finden auf der Vermittlungsplattform (VoIP-PT) statt. Es muss nicht auf einen DNS zurückgegriffen werden. Die Ermittlung erfolgt ohne kommunikativen Austausch mit weiteren Knoten im Internet. Wenn die Vermittlungsplattform (VolP-PT) zu dem Ergebnis gekommen ist, dass die übrig bleibenden Zahlenkombination keinem verwalteten realm entsprechen können, so bricht die Endgerätenummernverkürzung mit einer Fehlerrückmeldung (404 - Not Found) bzw. alternativ mit einem Announcement, einer Ansage an den Telefonteilnehmer, ab, andernfalls werden die Verkürzungen bis zur Eindeutigkeit sukzessive, immer wieder iterativ, fortgesetzt.

Auch wenn zahlreiche Beispiele angeführt worden sind, ist es verständlich, dass nur der Aspekt des mappings anhand einzelner, weniger Beispiel in die verschiedenen Vermittlungsrichtungen darstellbar ist. Leichte Abweichungen im Rahmen von Derivaten des SIP gehören in den Schutzumfang der vorliegenden Erfindung.

## Patentansprüche

1. Vermittlungsplattform für Internettelefonie (VoIP-PT),
umfassend wenigstens einen Proxy (Pr) und Registrar (Rg) zur Verwaltung registrierter Teilnehmer,
die nach dem Session Inition Protocol (SIP) oder einem ihrer Derivate arbeitet,
wobei der Registrar (Rg) mindestens einen realm, vorzugsweise mehrere realms, verwaltet,
und die mit wenigstens einem Gateway (VoIP-Gateway), insbesondere einem Voice-Switch oder Internet-Gateway, als Schnittstelle zu einem öffentlichen Telefonnetz (PSTN) in Verbindung steht,
und wobei an das öffentliche Telefonnetz (PSTN) eine Anzahl Telefonanlagen (PBx) angeschlossen sind, die eine beliebige Anzahl über Endgerätenummern (EN1, EN2, EN), bestehend aus Kopfnummern (KN, KN1, KN2) und Durchwahlnummern (DW, DW1, DW2), direkt adressierbare Endgeräte (PC, Tel, PDA) aufweisen,
**dadurch gekennzeichnet, dass**
eine aus dem öffentlichen Netz (PSTN) an den Proxy (Pr) gesendete Endgerätenummer (EN, EN1, EN2), insbesondere als called party number bezeichnet, über ein erstes Mapping-Verfahren (Map1) in der Vermittlungsplattform (VoIP-PT) für eine Zuordnung eines im Registrar (Rg) vermerkten realms und für eine Aussonderung einer Durchwahlnummer (DW, DW1, DW2) aufbereitet wird, und
dass eine aus einer Telefonanlage (PBx) an den Proxy (Pr) gesendete Durchwahlnummer (DW, DW1, DW2) nebst zuordenbarem realm über ein zweites Mapping-Verfahren (Map2) in der Vermittlungsplattform (VoIP-PT) zu einer Endgerätenummer (EN, EN1, EN2), insbesondere als calling party number, verbindbar ist.

2. Vermittlungsplattform nach Anspruch 1, **dadurch gekennzeichnet, dass**
die Zuordnung des ersten Mapping-Verfahrens (Map1) nach einem Reduktionsverfahren mit einer Kopfnummernidentifizierung zu einem korrespondierenden realm durchgeführt wird, insbesondere mit einem portfreien und gatewayfreien iterativen, an einem Ende der Endgerätenummer (EN, EN1, EN2) startenden, vorzugsweise sukzessiven, Reduktionsverfahren, das eine schrittweise Verkürzung der Endgerätenummer (EN, EN1, EN2) durchführt.

3. Vermittlungsplattform nach Anspruch 1 oder 2, **dadurch gekennzeichnet, dass**
das öffentliche Telefonnetz nach einem digitalen Standard, wie dem ISDN-Standard nach zum Beispiel SS7 oder C7, arbeitet, der Kopfnummernlängen der Kopfnummern (KN, KN1, KN2) zulässt, die für die eindeutige Bestimmung einer Teilnehmergruppe im öffentlichen Telefonnetz variabel ist.

4. Vermittlungsplattform nach einem der vorhergehenden Ansprüche, **dadurch gekennzeichnet, dass** das zweite Mapping-Verfahren (Map2) mittels Tabellenwerk (TW) aus dem realm in einem Zwischenschritt die Kopfnummer (KN, KN1, KN2) bildet, an die die gesendete Durchwahlnummer (DW, DW1, DW2) angebunden wird.

5. Vermittlungsplattform nach einem der vorhergehenden Ansprüche, **dadurch gekennzeichnet, dass** die Vermittlungsplattform einen Redirect (Re) umfasst, der insbesondere bei nicht durch die Vermittlungsplattform verwalteten realms die Unzuständigkeit der Vermittlungsplattform erkennt, signalisiert und vorzugsweise an die zuständige Vermittlungsplattform weiterleitet.

6. Vermittlungsplattform nach einem der vorhergehenden Ansprüche, **dadurch gekennzeichnet, dass** die an das öffentliche Netz angeschlossenen Telefonanlagen (PBx) als private Endgeräte, auch in öffentlicher Hand, des öffentlichen Telefonnetzes gelten, die in Form eines Gateways, insbesondere VolP-Gateways, einer Telefonanlage, einer Kleinverteileranlage und dergleichen, die physikalische Verbindung zwischen öffentlichem Netz und privater Telefonanlage herstellen.

7. Vermittlungsplattform nach einem der Ansprüche 4 bis 6, **dadurch gekennzeichnet, dass** das Tabellenwerk (TW) eine Liste umfasst, wie eine Durchwahlnummernliste (DW-Liste), insbesondere in Form einer weiteren Dimension des Tabellenwerks (TW), die die Durchwahlnummern (DW, DW1, DW2) verwaltet.

8. Vermittlungsplattform nach Anspruch 7, **dadurch gekennzeichnet, dass** die Durchwahlnummernliste (DW-Liste) im Proxy aus SIP-Protokollen, einfügbaren Updates oder Telefonieteilnehmeridentifikationen ergänzbar ist.

9. Vermittlungsplattform nach einem der vorhergehenden Ansprüche, **dadurch gekennzeichnet, dass** das SIP-Derivat einen Befehl umfasst, der die Durchwahlnummer (DW, DW1, DW2) an die mittels Kopfnummer (KN, KN1, KN2) identifizierte Telefonanlage (PBx) überträgt, beispielhaft einen rufaufbauenden Befehl wie ein Invite, Refer oder Reinvite.
